# EUROPEAN PATENT SPECIFICATION

(11) **EP 3 424 670 B1**
(45) Date of publication and mention of the grant of the patent: **08.04.2020**
(21) Application number: 18181377.5
(22) Date of filing: 03.07.2018
(51) Int. Cl.: B29C 45/17, B29C 45/42, B29C 45/76, A24D 3/06

(54) **METHOD AND MANUFACTURING MACHINE FOR THE PRODUCTION OF CAPSULES FOR SMOKING ARTICLES, IN PARTICULAR FOR FILTERS, DESIGNED TO CONTAIN A LIQUID TO BE USED IN THE COOLING OF THE SMOKE**
VERFAHREN UND FERTIGUNGSMASCHINE ZUR HERSTELLUNG VON KAPSELN FÜR RAUCHARTIKEL, INSBESONDERE FÜR FILTER, DIE DAFÜR KONZIPIERT SIND, EINE FLÜSSIGKEIT ZUR KÜHLUNG DES RAUCHS AUFZUNEHMEN
PROCÉDÉ ET MACHINE DE FABRICATION POUR LA PRODUCTION DE CAPSULES POUR ARTICLES À FUMER, NOTAMMENT POUR DES FILTRES, CONÇUES POUR CONTENIR UN LIQUIDE DESTINÉ À ÊTRE UTILISÉ DANS LE REFROIDISSEMENT DE LA FUMÉE

(30) Priority: 03.07.2017 IT 201700074057
(43) Date of publication of application: 09.01.2019
(73) Proprietor: G.D SOCIETA' PER AZIONI, 40133 Bologna (IT)
(72) Inventor: MADERA, Giovanni, 40126 BOLOGNA (IT); PARAZZA, Davide, 40133 BOLOGNA (IT); MALDOTTI, Sergio, 44123 FERRARA (IT); FEDERICI, Luca, 40135 BOLOGNA (IT)
(74) Representative: Musconi, Roberta

(56) References cited:
- EP-A1- 2 982 254
- JP-A- H09 123 232
- US-A- 4 865 056
- US-A- 5 840 222
- US-A1- 2012 124 945
- US-A1- 2016 244 193
- US-A1- 2017 165 891

## Description

### TECHNICAL FIELD

The present invention relates to a method and to a manufacturing machine for the production of capsules for smoking articles, in particular for filters, designed to contain a liquid to be used in the cooling of the smoke.

### PRIOR ART

Recently, it has been proposed to use capsules for smoking articles, in particular for filters, designed to contain a liquid to be used in the cooling of the smoke.

In particular, the capsules are suitable for containing water or a mixture of water and a flavour.

Typically, said capsules comprise a cup-shaped body preferably made in one piece, for example made of a plastic material, defined by a tubular side wall and, at one end, by a bottom wall or a circular shaped bottom element. The side wall has a longitudinal axis and delimits, with the bottom wall, a compartment which is adapted to contain a predetermined amount of liquid. The side wall is provided with a plurality of ribs which extend in a cantilever fashion from the outer surface of the side wall, extend over the entire length of the side wall and are uniformly distributed around the longitudinal axis.

The bottom wall is connected at a given height of the side wall and the connection between the bottom wall and the inner surface of the side wall is made by means of a weakened profile so as to allow, in use, the breaking under the action of a force imparted from the outside in order to pour out the liquid contained inside the compartment.

Finally, the compartment is open at the top and is closed by a lid conveniently formed by a film or a wrap made of PET/PE. The capsule furthermore comprises, a collar i.e. an annular flange which extends in a cantilever fashion from the end of the side wall opposite the bottom wall and is arranged on a plane which is approximately orthogonal to said longitudinal axis.

Alternatively, capsules are known which comprise a cup-shaped body preferably made in one piece, for example made of a plastic material, defined by a tubular side wall and, at an end, by a bottom element having a polygonal shaped central portion, for example hexagonal. The cup-shaped body has a slightly tapered shape towards the bottom element. The side wall has a longitudinal axis and delimits, with the bottom element, a compartment which is adapted to contain a predetermined amount of liquid. The side wall has a polygonal shape in plan; in particular, the side wall has a hexagonal shape in plan, in which six side wall portions are connected to one another by means of six connecting sections. The connecting sections are internally weakened so as to allow, in use, to deform and collapse under the action of a force impressed from the outside by the user to pour out the liquid contained inside the compartment. The compartment is open at the top and is closed by a lid conveniently formed by a film or a wrap made of PET/PE. The capsule furthermore comprises, a collar i.e. an annular flange which extends in a cantilever fashion from the end of the side wall opposite the bottom wall and is arranged on a plane which is approximately perpendicular to said longitudinal axis.

Capsules for smoking articles, of the type described above, have dimensions of the order of one centimetre.

Typically, said capsules are produced by a manufacturing machine in which the capsules travel through a forming path through a moulding station of the cup-shaped body, a control station for the cup-shaped bodies which are obtained by moulding, a filling station with the liquid and a subsequent shearing and sealing station of the covering element to the cup-shaped body.

Typically, the moulding station of the cup-shaped bodies is provided with a vertical mould adapted to be fitted on a moulding machine made of two half-moulds, namely a female half-mould and a male half-mould, which are fitted, in use, facing each other to move, one with respect to the other, in a coupling direction from and towards a closed moulding position, wherein the respective contact surfaces of the two half-moulds define a plurality of closed impressions which reproduce in negative the shape of the cup-shaped bodies to be made. The moulding station then comprises a handling press for moving the half-moulds and a feed line for the plastic material which feeds the plastic material in a liquid state to the moulding chamber in a controlled manner. Given the very small size of the capsules, in order to maintain an acceptable production quality during the moulding step, each impression (i.e., each cup-shaped body) must be spaced by at least 40 mm from the adjacent impressions and, similarly, during the control step, the cup-shaped bodies must be spaced from one another by about 40 mm to be able to check the conformity thereof. During the subsequent filling step with the liquid, a more compact arrangement would be appropriate, thus reducing the spacing between adjacent cup-shaped bodies.

Patent application US2012124945A1 describes a packaging method for the manufacturing of injection-moulded plastic parts, in particular pipette tips or medical reaction containers.

Patent application US2016244193 describes a method for transferring injection moulded objects, in particular pipette tips, from an injection moulding machine to packaging containers; the moulded articles having an annular arrangement are removed from a mould of an injection moulding machine by means of a movable clamp and are re-arranged in a row arrangement before being inserted into the packaging containers.

### DESCRIPTION OF THE INVENTION

The object of the present invention is to provide a manufacturing machine for the production of capsules for smoking articles, in particular for filters, designed to contain a liquid to be used in the cooling of the smoke which, is free from the drawbacks of the state of the art and is, at the same time, simple and inexpensive to implement.

Another object of the present invention is to provide a method for the production of capsules for smoking articles, in particular for filters, designed to contain a liquid to be used in the cooling of the smoke which is free from the drawbacks of the state of the art and is, at the same time, simple and inexpensive to implement.

According to the present invention, methods and manufacturing machines are provided for the production of capsules for smoking articles, in particular for filters, designed to contain a liquid to be used in the cooling of the smoke, as claimed in the appended claims.

### BRIEF DESCRIPTION OF THE DRAWINGS

The present invention will now be described with reference to the attached drawings, which illustrate some non-limiting embodiments thereof, wherein:
- Figures 1a to 1c respectively illustrate a perspective view, a bottom view and a section view along the line c-c of a capsule made by the manufacturing machine which is the object of the present invention;
- Figure 2 and Figure 3 are perspective views of a manufacturing machine made according to the present invention;
- Figure 4 is a further perspective view and with parts removed for clarity of the manufacturing machine of Figure 2;
- Figure 5 is a rear view of the manufacturing machine of Figure 2;
- Figure 6 is an enlarged view and with parts removed for clarity of a detail of Figure 5;
- Figure 7 is a rear view of a first support member of the manufacturing machine of Figure 2 in a first operating configuration;
- Figure 8 is a front view of the support member in the first operating configuration of Figure 7;
- Figure 9 schematically illustrates the arrangement of the seats obtained in a second support member of the manufacturing machine of Figure 2;
- Figure 10 schematically illustrates the arrangement of the seats obtained in the first support member of the manufacturing machine of Figure 2 in a second operating configuration; and
- Figures 11 to 14 illustrate in sequence the steps of filling a tray with the semi-finished capsules of Figure 1.

### PREFERRED EMBODIMENTS OF THE INVENTION

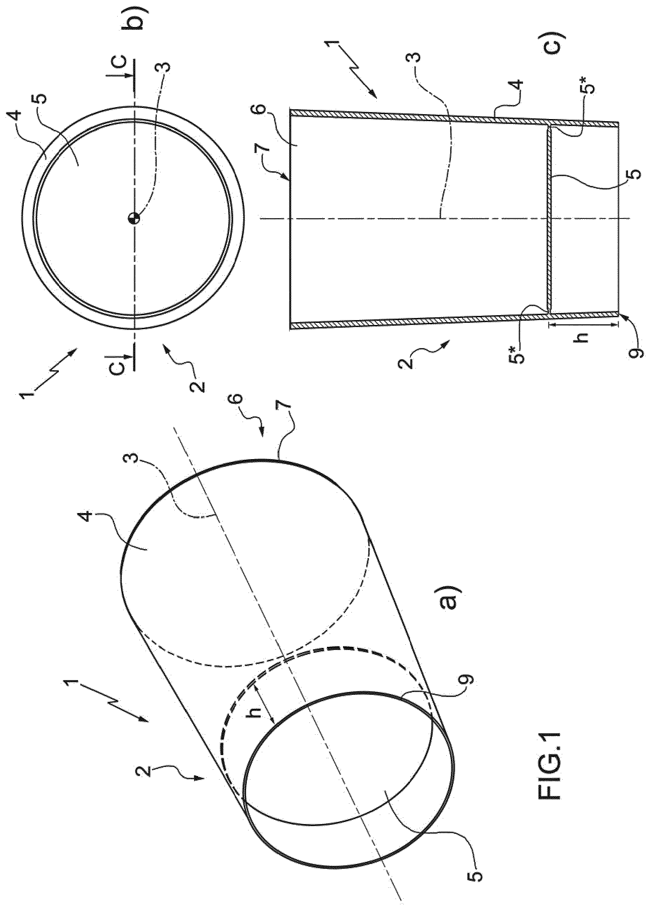

In Figure 1, number 1 denotes as a whole a capsule 1 for smoking articles, in particular for filters, designed to contain a liquid to be used in the cooling of the smoke. In particular, the capsule 1 is suitable for containing water or a mixture of water and a flavour.

The capsule 1 comprises a cup-shaped body 2 preferably made in one piece, for example made of a plastic material, defined by a tubular side wall 4 and, at one end, by a circular shaped bottom wall 5 or bottom element. The cup-shaped body 2 has a shape that tapers slightly towards the bottom wall 5. Alternatively, the cup-shaped body 2 has a substantially cylindrical shape. The side wall 4 has a longitudinal axis 3 and delimits, with the bottom wall 5, a compartment 6, which is adapted to contain a predetermined amount of liquid. The side wall 4 has a circular shape in plan. According to a preferred variant, the side wall 4 is provided with a plurality of ribs (not illustrated) which extend in a cantilever fashion from the outer surface of the side wall 4, extend over the entire length of the side wall 4 and are uniformly distributed around the longitudinal axis 3.

According to what is better illustrated in Figure 1c, the bottom wall 5 is connected at a height h of the side wall 4. In other words, the bottom wall 5 is not arranged flush with the lower edge 9 of the side wall 4 but fits at a height h with respect to said lower edge 9.

The connection between the bottom wall 5 and the inner surface of the side wall 4 is obtained by means of a weakened profile 5* (of reduced thickness) to allow, in use, the breakage under the action of a force imparted from the outside in order to pour the liquid contained inside the compartment 6. The compartment 6 is open at the top and is closed by a lid 7 conveniently formed by a film or wrap made of PET/PE. The capsule 1 comprises, furthermore, a collar defined by the upper surface of the side wall 4 to which the lid 7 is connected. Alternatively, the capsule 1 comprises a collar defined by an annular flange (not illustrated), which extends in a cantilever fashion from the end of the side wall 4 opposite the bottom wall 5 and is arranged on a plane approximately orthogonal to said longitudinal axis 3.

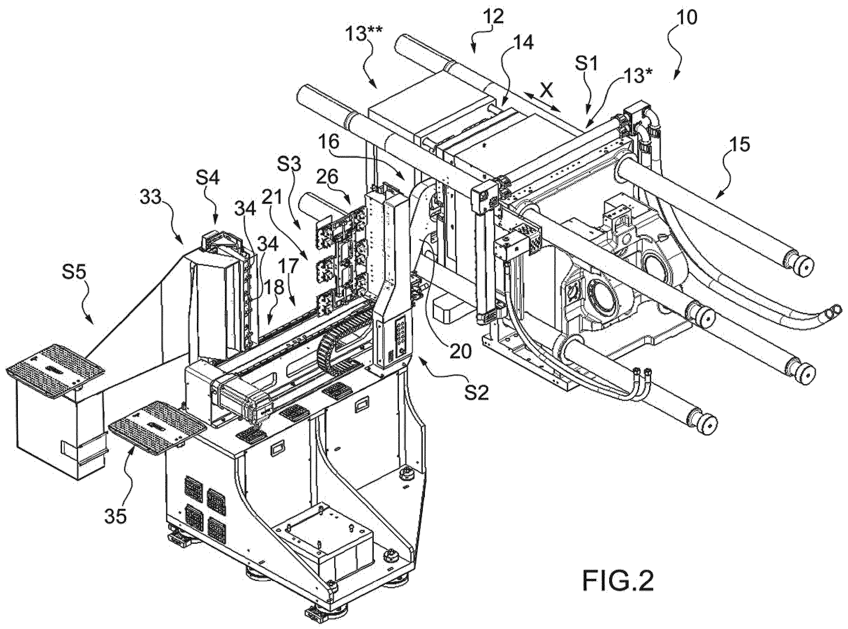

In Figure 2 number 10 denotes as a whole a manufacturing machine for the production of the capsules 1 for smoking articles described above. The capsules 1 travel along a forming path through a moulding station S1 of the semi-finished capsules 1, and in particular of the cup-shaped bodies 2, a check and control station S2 for the collars, a transfer station S3 for the cup-shaped bodies 2, a further check and control station S4 for checking the presence of any strands of plastic material protruding from the lower edge 9 of the side wall 4, residues of the moulding step, a transfer station S5 for transferring the cup-shaped bodies 2 into trays, a station filling (not illustrated) with the liquid, and a shearing and sealing station (not illustrated) for the covering elements 7 to the respective cup-shaped bodies 2.

The moulding station S1 of the capsules 1 is provided with a vertical mould 12 adapted to be fitted on a moulding machine (not illustrated in detail) made preferably by, but not necessarily, two parallelepiped-shaped shells 13, which are fitted in use, facing each other on a framework of the moulding machine to move from and towards a closed moulding position, wherein the two shells 13 define a moulding chamber 14 between one another.

The moulding station S1 then comprises a handling press 15 for moving the shells 13, which supports the two shells 13, and is structured so as to be able to bring, on command, the same shells 13 in abutment against one another so as to form, cyclically, the cup-shaped bodies 2.

At the end of the moulding step, the two shells 13 are moved away from one another and a support member 16 for the cup-shaped bodies 2 is inserted between them, which is made to hold and transfer the cup-shaped bodies 2. Preferably, the shell 13* acts as a movable male half-mould whereas the shell 13** acts as a fixed female half-mould. The male half-mould 13* or punch is movable relative to the female half-mould 13** or die in a coupling direction X and is suitable for being set in abutment against the female half-mould 13**; the two half-moulds 13** and 13* are shaped so as to form, between the respective contact surfaces, a plurality of closed impressions which reproduce in negative the shape of the cup-shaped bodies 2 to be made, in particular ninety-six closed impressions. The cup-shaped bodies 2 obtained at the end of the moulding step have the longitudinal axis 3 parallel to the coupling direction X.

Finally, the moulding station S1 comprises a feed line for the plastic material (not illustrated) obtained partially in the shell 13** which is adapted to receive, as input, a more or less continuous flow of granular plastic material, to liquefy said granular plastic material, and, finally, to feed the plastic material in a liquid state to the moulding chamber 14 which is formed at the centre of the mould 12 subsequent to the coupling of the two shells 13 by means of the nozzles.

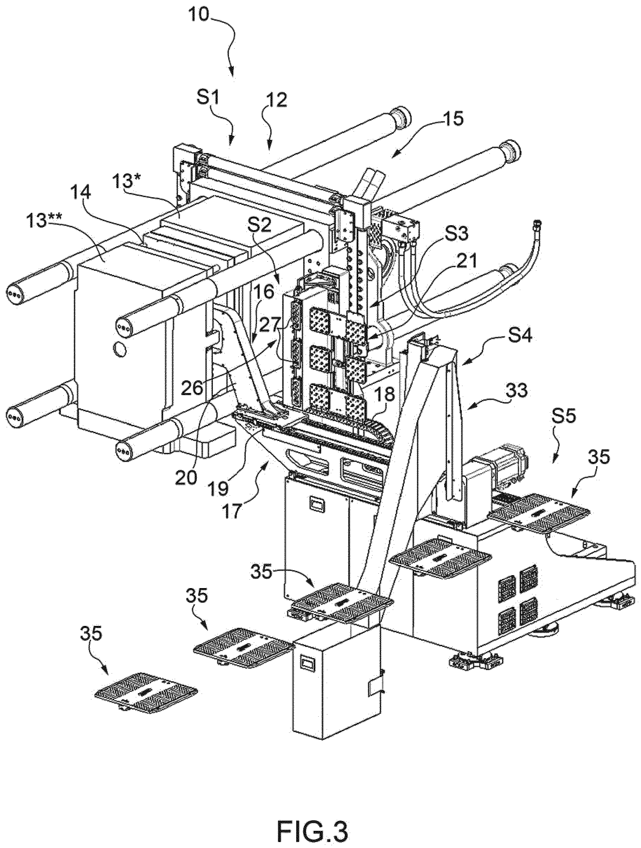

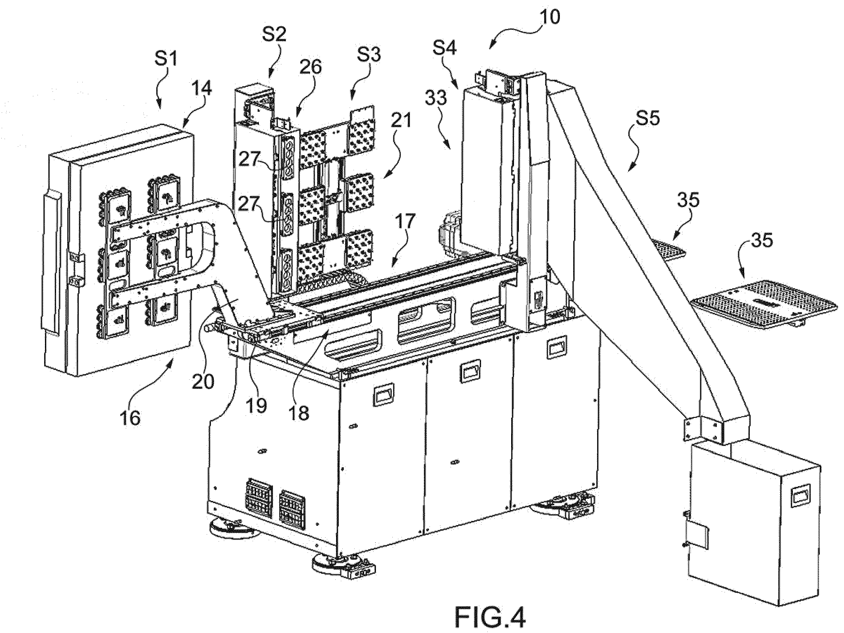

According to what is better illustrated in Figures 3 and 4, the manufacturing machine 10 comprises a handling system 17 for the support member 16 which develops along a straight path; in which the processing stations S1 to S5 are arranged along said handling system 17.

The handling system 17 comprises a transport conveyor 18 which comprises a single slide 19 supporting the support member 16 to which it is connected with the interposition of a bracket 20. The conveyor 18 moves the slide 19 along the straight path between two extreme positions; in particular, a first extreme position corresponds to a moulding position in which the support member 16 is inserted inside the mould 12 whereas a second extreme position corresponds to a transfer position of the cup-shaped bodies 2 to a support member 21.

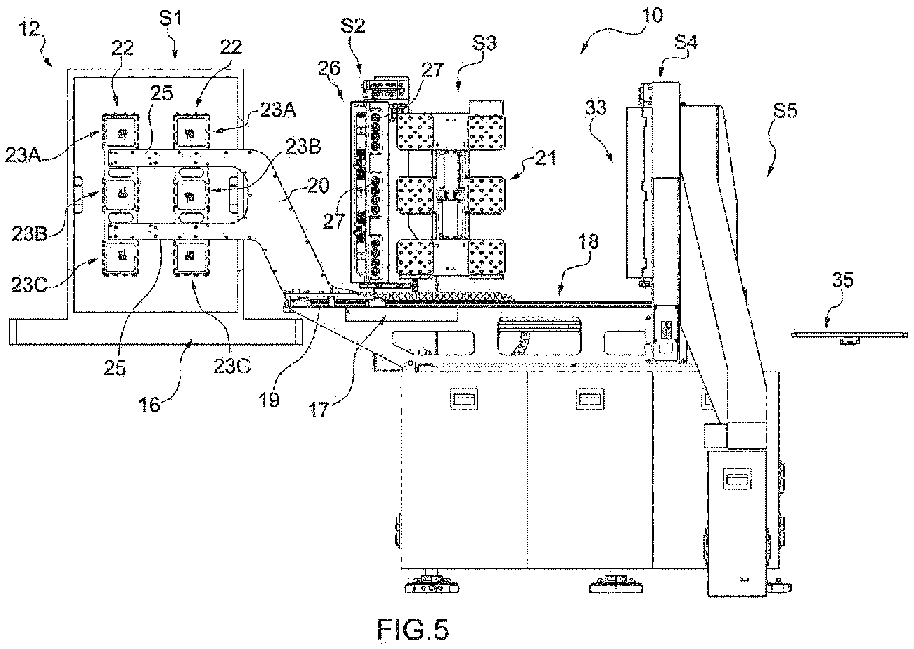

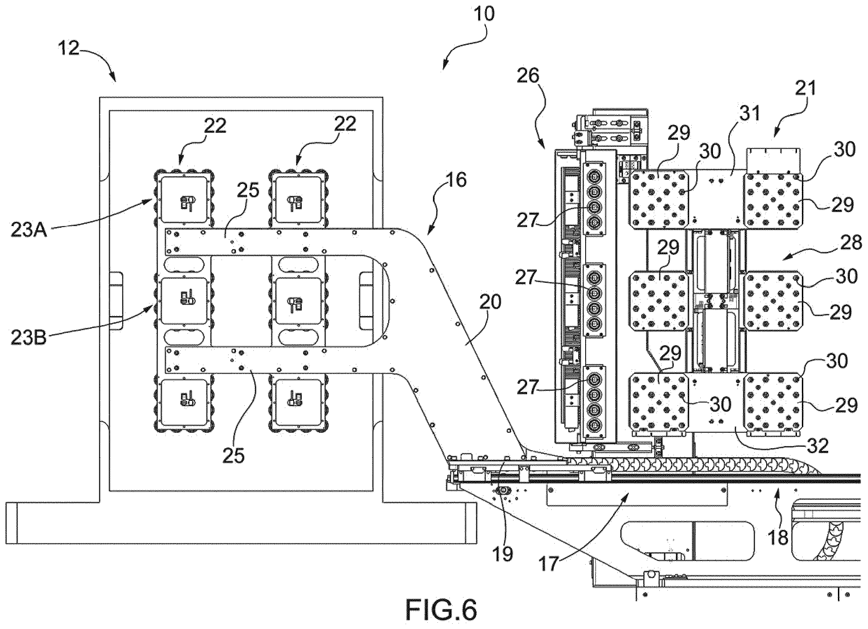

According to what is better illustrated in Figures 5 and 6, the support member 16 is formed by means of a pair of plates 22 arranged side by side; to each of said plates 22 three capsule-carrier elements 23 are connected, having a substantially square shape in plan. According to a variant, the support member 16 is defined by an individual plate 22 having an H-shape to which six capsule-carrier elements 23 are connected, having a substantially square shape in plan.

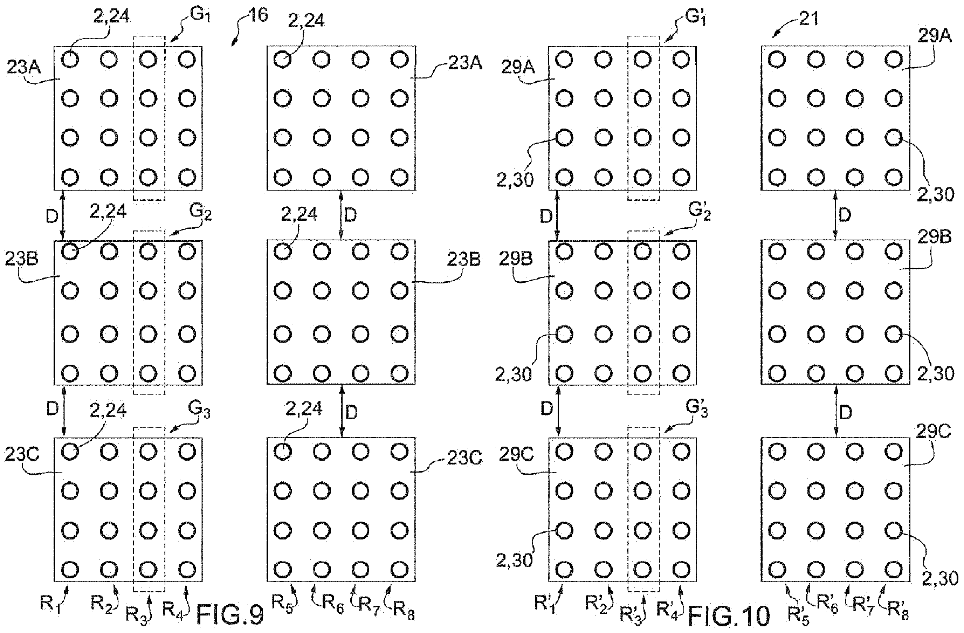

Each capsule-carrier element 23 is designed to house a given number of cup-shaped bodies 2 in respective seats 24 which are equidistant and uniformly distributed on the available surface of the capsule-carrier element 23. The arrangement of the seats 24 / cup-shaped bodies 2 on the support member 16 is schematically illustrated in Figure 9. In particular, each capsule-carrier element 23 is designed to house sixteen cup-shaped bodies 2 in as many seats 24 arranged on four rows and four lines equidistant from each other. The three capsule-carrier elements 23 are arranged at the ends and the central area of a front face of the respective plate 22. The three capsule-carrier elements 23 are uniformly distributed along the entire length of the respective plate 22 and are arranged at a distance D from one another. In other words, the central capsule-carrier element 23B is equidistant from each of the two peripheral capsule-carrier elements 23A, 23C. Moreover, the rear face of both plates 22 is connected to two arms 25 of the bracket 20 at the free areas between two capsule-carrier elements 23. In other words, each arm 25 is interposed between two capsule-carrier elements 23. Basically, according to what is schematically illustrated in Figure 9, the support member 16 carries eight rows R₁-R₈ of twelve cup-shaped bodies 2 divided into three groups G₁-G₃ arranged at a distance D from one another of four cup-shaped bodies 2 each. It should be pointed out that the nozzles arranged on the shell 13** have an arrangement that mirrors the arrangement of the seats 24.

According to a preferred variant, the support member 16 has an air sucking and blowing device provided with a pump (not illustrated) which is connected to each seat 24 through a respective duct so as to place each seat 24 in communication with the pump at the end of the moulding step, during the control and transfer step in order to improve the holding of the cup-shaped bodies 2 inside the respective seats 24 and the transferring of the same.

At the end of the moulding step, the two shells 13 are opened, the suction system of the support member 16 is activated, the cup-shaped bodies 2 are withdrawn and held by the support member 16 and the slide 19 is controlled up to transit at the control station S2. The cup-shaped bodies 2 are transferred from the moulding station S1 to the control station S2. In particular, the cup-shaped bodies 2 are translated in a direction orthogonal to their longitudinal axis 3 in the movement from the moulding station S1 to the control station S2.

The station S2 comprises an optical control device 26 which checks the conformity of the collars to avoid compromising the subsequent sealing step of the covering element 7 to the collar itself. In particular, the optical control device 26 comprises a number of optical control devices 27 (for example a CCD camera) arranged in succession for carrying out, in parallel, the checking on a given number of cup-shaped bodies 2. Even more in detail, the optical control device 26 is made by means of a row of twelve optical control devices 27 divided into three equidistant groups of four optical control devices each. In essence, the arrangement of the control devices 27 reproduces the arrangement of the seats 24 of each of the rows R₁-R₈. In this way it is possible to carry out a simultaneous check on the cup-shaped bodies of a same row R₁-R₈. The slide 19 moves further towards the transfer station S3, which is arranged downstream of the control station S2, thus allowing the optical control device 26 to carry out in succession the checking on the eight rows R₁-R₈ of cup-shaped bodies 2.

The slide 19 is controlled until it stops at the transfer station S3. In particular, the support member 16 stops in a position directly facing the support member 21 of the cup-shaped bodies 2. The transfer station S3 provides a movement arm (of a known type and not illustrated) connected to the support member 21.

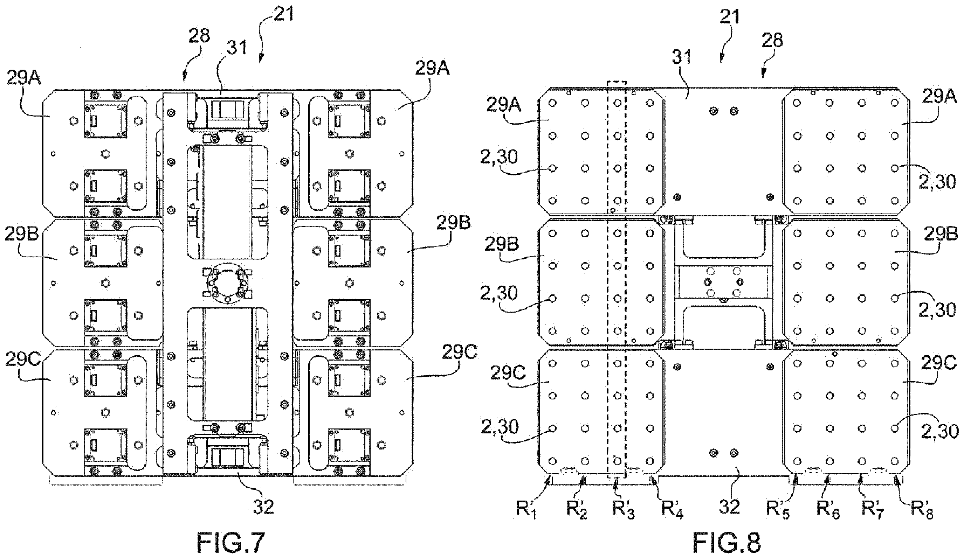

According to what is better illustrated in the figures, the support member 21 is formed by means of a frame 28 to which six capsule-carrier elements 29 are connected, arranged on two rows of three capsule-carrier elements 29 each and having a substantially square shape in plan. Each capsule-carrier element 29 is designed to house a given number of cup-shaped bodies 2 in respective seats 30 which are equidistant from one another and uniformly distributed on the available surface of the capsule-carrier element 29. In particular, each capsule-carrier element 29 is designed to house sixteen cup-shaped bodies 2 arranged on four rows and four lines equidistant from each other. The central capsule-carrier elements 29B of each row are fixed to a front surface of the frame 28. The upper capsule-carrier elements 29A of each row are fixed to a common plate 31 connected to the frame 28 and, in a completely similar manner, the lower capsule-carrier elements 29C of each row are fixed to a common plate 32 connected to the frame 28. The two plates denoted with 31 and 32 are movable along the frame 28 between a first position (illustrated in Figures 6 and 10) in which they are arranged at the respective ends of the frame 28 itself and a second position (illustrated in Figures 7 and 8) in which they are arranged close to the central capsule-carrier elements 29B, and vice-versa.

According to a preferred alternative, the capsule-carrier elements 29 are provided with adjustable limit stop elements (not illustrated, of a known type and not described in detail) so as to be arranged, in the second position, at a given distance from one another.

In the first position schematically illustrated in Figure 10, the three capsule-carrier elements 29 of each row are uniformly distributed along the frame 28 and arranged at a distance D, other than zero, from one another (the capsule-carrier elements 29 can be provided with adjustable limit stop elements so as to be arranged at said distance D). In other words, the central capsule-carrier element 29B is equidistant from each of the two peripheral capsule-carrier elements 29A, 29C. Substantially, in the first position, the support member 21 carries eight rows R'₁-R'₈ of twelve cup-shaped bodies 2 divided into three groups G'₁-G'₃ arranged at a distance D from one another of four cup-shaped bodies 2 each. It is important to underline that, in the first position, the arrangement of the seats 30 mirrors the arrangement of the seats 24 in the support member 16.

In the second position illustrated in Figure 8, the three capsule-carrier elements 29 of each row are arranged close relative to the first position, so as to obtain eight rows R'₁-R'₈ of twelve cup-shaped bodies 2 arranged in succession and substantially equidistant from each other. Ultimately, the ninety-six cup-shaped bodies 2 are divided into two groups of forty-eight cup-shaped bodies 2 each, equidistant from each other.

According to a preferred alternative, the support member 21 has an air sucking and blowing device provided with a pump (not illustrated) which is connected to each seat 30 through a respective duct so as to place each seat 30 in communication with the pump during the control and transfer step in order to provide, by suction, the holding of the cup-shaped bodies inside the respective seats 30.

When the support member 16 stops at the transfer station S3 in the position directly facing the support member 21, the two plates 31 and 32 are in the first position. The movement arm moves the support member 21 closer to the support member 16, the suction system of the support member 16 is deactivated and, at the same time, the suction system of the support member 21 is activated so as to allow the transfer of the cup-shaped bodies 2 from the seats 24 to the corresponding seats 30. According to a preferred alternative, the blowing system of the support member 16 is activated in order to facilitate the passage of the cup-shaped bodies 2 from the seats 24 to the seats 30 to which they are directly facing. In the transfer from the support member 16 to the support member 21, the cup-shaped bodies 2 are moved along the respective longitudinal axis 3. The cup-shaped bodies 2 are transferred from the support member 16 to the support member 21, feeding them in a direction substantially parallel to their longitudinal axis 3.

In other words again, in the transfer from the support member 16 to the support member 21, the cup-shaped bodies 2 are translated along their longitudinal axis 3 so that, when the cup-shaped bodies 2 are contained inside the seats 30, the respective bottom walls 5 are visible and can be inspected, contrary to what happened when the cup-shaped bodies 2 were housed inside the seats 24, in which collars were visible. Subsequently, the slide 19 is controlled until it passes again at the moulding station S1 to start a new cycle.

The cup-shaped bodies 2 are then transferred from the transfer station S3 to the control station S4. In particular, the cup-shaped bodies 2 are translated in a direction orthogonal to their longitudinal axis 3 in the movement from the transfer station S3 to the control station S4.

The control station S4 and the control station S2 are on opposite sides of the handling system 17.

The control station S4 comprises an optical control device 33 which checks the conformity of the terminal end of the side wall 4 in order to avoid the undesirable presence of plastic material strands protruding from the lower edge 9 of the side wall 4 and being residues of the moulding step. In particular, the optical control device 33 comprises a number of optical control devices 34 (for example a CCD camera) arranged in succession for carrying out, in parallel, the checking on a given number of cup-shaped bodies 2. According to a preferred variant, the optical control device 33 comprises a number of optical control devices 34 which is equal to half the number of cup-shaped bodies 2 aligned in each row R'₁-R'₈. Even more in detail, the optical control device 33 is made by means of a row of six optical control devices 34 divided into three, equidistant, groups of two optical control devices 34 each. Each optical device 34 directly faces the support member 21, is interposed between two cup-shaped bodies 2 arranged in succession and cooperates with two reflecting elements (typically a pair of mirrors) which reflect the image of said two cup-shaped bodies 2 to check the presence of plastic material strands protruding from the lower edge 9 of the side wall 4, residues of the moulding step. In this way it is possible to carry out a simultaneous check on all the cup-shaped bodies of a same row R'₁-R'₈. The translation movement of the arm (and, therefore, of the support member 21) allows the control station S4 to carry out in succession the check on the eight rows R'₁-R'₈ of cup-shaped bodies 2.

Alternatively, the optical control device 33 can comprise a number of optical control devices 34 which is equal to the number of cup-shaped bodies 2 aligned in each row R'₁-R'₈. The arrangement of the control devices 34 reproduces the arrangement of the seats 30 in each row R'₁-R'₈ for carrying out the simultaneous verification on all the cup-shaped bodies 2 of a same row R'₁-R'₈.

Once the step of checking the presence of plastic material strands protruding from the lower edge 9 of the side wall 4 is completed, the two plates 31 and 32 are actuated to move from the first position to the second position in which they are arranged close to the central capsule-carrier elements 29B.

Furthermore, once the step of checking for the presence of plastic material strands protruding from the lower edge 9 of the side wall 4 is completed, for those seats 30 which house cup-shaped bodies 2 that were not compliant, the suction is deactivated and the blowing device is activated in order to achieve a selective discarding of only non-compliant cup-shaped bodies 2 that did not pass the control steps.

Upon leaving the control station S4, the arm first changes the orientation of the individual cup-shaped bodies (by a 90° rotation) and then delivers the cup-shaped bodies 2 to trays 35 fed on a conveyor (not illustrated) up to a subsequent filling station with the liquid.

According to what is schematically illustrated in Figures from 11 to 14, the trays 35 have a plurality of seats 36 each designed to receive and house a respective cup-shaped body 2; the seats 36 are typically divided into several rows 37 divided into two groups 38*, 38** equal to one another. In particular, in each tray 35 a number of seats 36 are obtained, which is equal to a multiple k of the number of seats 30 of the support member 21. In particular, in each tray 35 a number of seats 36 are obtained, which is equal to four times the capacity of the support member 21 (that is, 384 seats) divided into two equal groups 38*, 38** of 192 seats arranged on twenty-four lines and eight rows 37. To allow the tray 35 to be filled, the arm must therefore complete four picking and transferring cycles of the cup-shaped bodies 2.

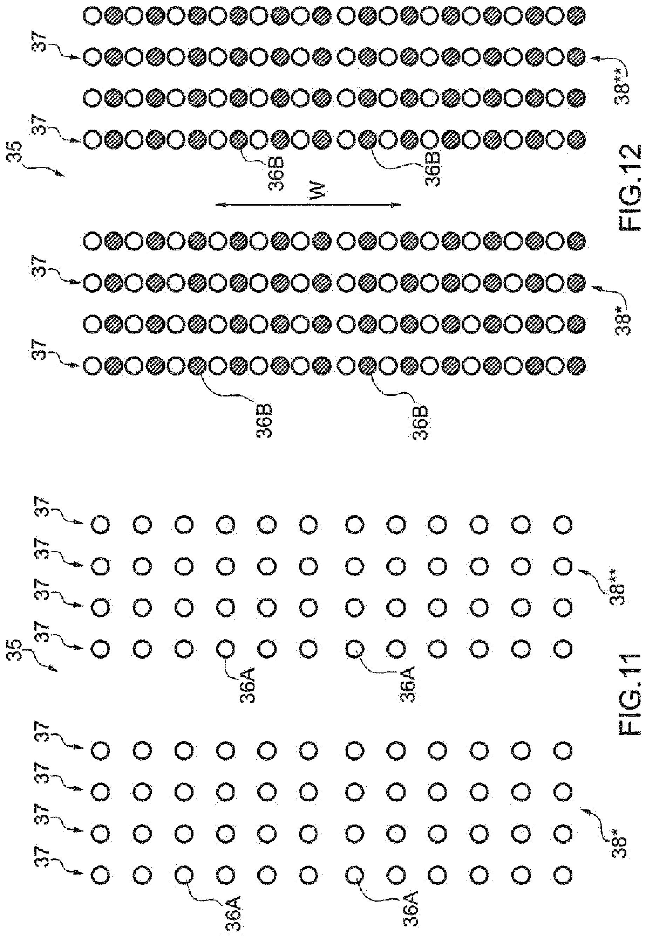

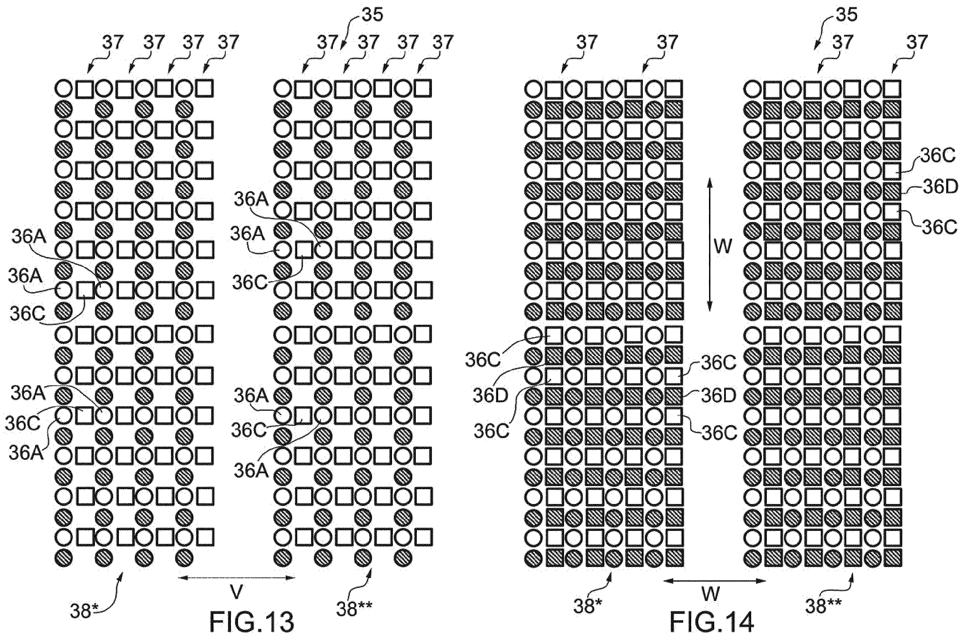

The filling sequence is as follows:
- in the first cycle (illustrated in Figure 11) the seats denoted with 36A are filled;
- in the second cycle (illustrated in Figure 12) the seats denoted with 36B are filled, wherein each of the seats 36B is interposed between two seats 36A along a first direction W;
- in the third cycle (illustrated in Figure 13) the seats denoted with 36C are filled, wherein each of the seats 36C is interposed between two seats 36A along a second direction V orthogonal to the first direction W; and
- finally, in the fourth cycle (illustrated in Figure 14) the seats denoted with 36D are filled, wherein each seat 36D is interposed between two seats 36C along the first direction W so as to obtain two groupings 38 of eight rows 37 of twenty-four seats 36 each.

It is clear that alternative filling sequences to the one just described can be provided, such as for example:
- in the first cycle the seats denoted with 36A are filled;
- in the second cycle the seats denoted with 36B are filled, wherein each of the seats 36B is interposed between two seats 36A along the second direction V;
- in the third cycle the seats denoted with 36C are filled, wherein each of the seats 36C is interposed between two seats 36A along the first direction W orthogonal to the second direction V; and
- in the third cycle the seats denoted with 36D are filled wherein each seat 36D is interposed between two seats 36C along the first direction W so as to obtain two groupings 38 of eight rows 37 of twenty-four seats 36 each.
It is important to underline that, at the end of the filling sequence, the spacing between two adjacent cup-shaped bodies 2 in the tray 35 is halved both in the direction W and in the direction V with respect to the distance between two cup-shaped bodies 2 side by side in the support member 21.

According to an alternative embodiment, the female half-mould or die is defined by the shell 13* and the male half-mould or punch is defined by the shell 13**. According to this variant, in the station S2 the presence of any plastic material strands is checked, which are protruding from the lower edge 9 of the side wall 4, residues of the moulding step, and, in the station S4 the conformity of the collars is checked, in order to avoid compromising the subsequent sealing step of the covering element 7 to the collar itself.

The manufacturing machine 10 described up to now has various advantages. In particular, it allows to adapt the distance between the cup-shaped bodies according to the different working stations S1, S2, S3, S4, S5. In particular, where necessary (moulding station S1 and control stations S2, S4) the spacing between adjacent cup-shaped bodies 2 is doubled both in the direction W and in the direction V with respect to the distance between two cup-shaped bodies 2 arranged side by side in the tray 35 used in the subsequent filling station with the liquid, in which a compact configuration is required. Furthermore, the manufacturing machine 10 allows both to check the conformity of the collars of the individual cup-shaped bodies 2, in order to avoid compromising the subsequent sealing step of the covering element 7 to the collar itself, and to check any undesired presence of plastic material strands protruding from the lower edge 9 of the side wall 4, residues of the moulding step.

## Claims

1. A manufacturing machine (10) for the production of capsules (1) for smoking articles, in particular for filters, designed to contain a liquid to be used in the cooling of the smoke; wherein each capsule (1) comprises a cup-shaped body (2), defined by a side wall (4) and, at one end, by a bottom wall (5); the side wall (4) has a longitudinal axis (3) and delimits, with the bottom wall (5), a compartment (6), which is suitable for containing a predetermined amount of liquid; the capsule (1) comprising a collar defined by the end of the side wall (4) opposite the bottom wall (5); the manufacturing machine (10) comprises:
- a moulding station (S1) for the cup-shaped bodies (2);
- a first control station (S4) arranged downstream of the moulding station (S1) to check the conformity of a first wall (5) of the cup-shaped body (2); and
- a first transfer station (S5) arranged downstream of the first control station (S4) and transfers the cup-shaped bodies (2) into trays (35) fed on a conveyor;
the machine is **characterized in that** it comprises a support member (21) for a plurality of cup-shaped bodies (2) having at least three capsule-carrier tables (29), which are designed to house a given number of cup-shaped bodies (2) in respective first seats (30); wherein two peripheral capsule-carrier tables (29A, 29C) are movable between a first position, in which they are arranged at a distance (D), other than zero, from a central capsule-carrier table (29B), and a second position in which they are arranged close to the central capsule-carrier table (29B), and vice versa; wherein, in the transfer from the first control station (S4) to the first transfer station (S5), the two peripheral capsule-carrier tables (29A, 29C) are moved from the first position to the second position.

2. The machine according to claim 1, wherein the distance between two adjacent cup-shaped bodies (2) in the trays (35) is halved both in a first direction (W) and in a second direction (V) relative to the distance between two cup-shaped bodies (2) beside one another in the support member (21).

3. The machine according to one of the preceding claims, wherein each tray (35) has a number of second seats (36) that is equal to a multiple (k), preferably equal to four, of the number of first seats (30) of the support member (21).

4. The machine according to one of the preceding claims, wherein the capsule-carrier tables (29) are provided with adjustable limit stop elements, so as to be arranged, in the second position, at a given distance from one another.

5. The machine according to one of the preceding claims, wherein the first transfer station (S5) comprises an arm, which changes the orientation of the individual cup-shaped bodies (2) rotating them by 90° and subsequently transfers them into trays (35) fed on the conveyor.

6. The machine according to one of the preceding claims, wherein the cup-shaped bodies (2) are arranged in the support member (21) in several rows (R'₁-R'₈) and the first control station (S4) comprises an optical control device (33) provided with a number of optical devices (34), which are aligned so as to simultaneously carry out the control of all the cup-shaped bodies (2) of the same row (R'₁-R'₈).

7. The machine according to claim 6, wherein the number of optical devices (34) is half the number of the cup-shaped bodies (2) which make up each row (R'₁-R'₈); and wherein each optical device (34) directly faces the support member (21), is interposed between two cup-shaped bodies (2) arranged in succession and cooperates with two reflecting elements, in particular two mirrors, so as to simultaneously carry out the control of both said cup-shaped bodies (2) arranged in succession.

8. The machine according to one of the preceding claims, wherein, in the first position, the cup-shaped bodies (2) are arranged in several rows (R'₁-R'₈), wherein each row (R'₁-R'₈) is divided into a number of groups (G'₁-G'₃) arranged at a distance (D), other than zero, from one another; and, in the second position, the cup-shaped bodies (2) are arranged in several rows (R'₁-R'₈) and are equidistant from one another.

9. The machine according to one of the preceding claims, wherein the support member (21) for a plurality of cup-shaped bodies (2) has six capsule-carrier tables (29) arranged in two rows with three capsule-carrier tables (29) each; wherein the peripheral capsule-carrier tables (29A, 29C) are connected to two respective plates (21, 32), which are movable from the first to the second position, and vice versa.

10. A method of use of the manufacturing machine (10) according to one of the claims from 1 to 9 for the production of capsules (1) for smoking articles, in particular for filters, designed to contain a liquid to be used in the cooling of the smoke; wherein each capsule (1) comprises a cup-shaped body (2), which is defined by a side wall (4) and, at one end, by a bottom wall (5); the side wall (4) has a longitudinal axis (3) and delimits, with the bottom wall (5), a compartment (6), which is suitable for containing a predetermined amount of liquid; the capsule (1) comprising a collar defined by the end of the side wall (4) opposite the bottom wall (5); the method provides in sequence:
- a moulding step to mould the cup-shaped bodies (2) wherein the cup-shaped bodies (2) are arranged in several rows (R'₁-R'₈), each of which is divided into a number of groups (G'₁-G'₃) arranged at a distance (D), other than zero, from one another;
- a first control step to check the conformity of a first wall (5) of the cup-shaped body (2); and
- a transfer step to transfer the cup-shaped bodies (2) into trays (35) fed on a conveyor, during said transfer step the cup-shaped bodies (2) are moved closer to one another, so as to be arranged equidistant from one another in several rows (R'₁-R'₈).

11. The method according to claim 10 and comprising the further step of halving the distance between two adjacent cup-shaped bodies (2) in the trays (35) both in a first direction (W), and in a second direction (V).

12. The method according to claim 10 or 11 and comprising the further step, subsequent to the control step, of transferring the cup-shaped bodies (2) by rotating them by 90°.

13. The method according to one of the claims 10 to 12 and comprising the further step of repeating in succession the transfer step to transfer the cup-shaped bodies (2) for a given number of times, preferably equal to four, in order to fill the tray (35).

14. The method according to claim 13 and comprising in succession the further steps of:
- filling first seats (36A) of the tray (35);
- filling second seats (36B) of the tray (35), wherein the second seats (36B) are interposed between respective first seats (36A) along a first direction (W, V);
- filling third seats (36C) of the tray (35), wherein the third seats (36C) are interposed between respective first seats (36A) along a second direction (V, W); and
- filling fourth seats (36D) of the tray (35), wherein the fourth seats (36D) are interposed between respective third seats (36C) along the first direction (W, V).

## Patentansprüche

1. Herstellungsmaschine (10) für die Produktion von Kapseln (1) für Raucherzeugnisse, insbesondere für Filter, die dafür ausgelegt sind, eine Flüssigkeit zu enthalten, die beim Kühlen des Rauchs verwendet werden soll; wobei jede Kapsel (1) einen becherförmigen Körper (2) umfasst, der durch eine Seitenwand (4) und an einem Ende durch eine Bodenwand (5) definiert ist; wobei die Seitenwand (4) eine Längsachse (3) aufweist und mit der Bodenwand (5) ein Fach (6) begrenzt, das zum Enthalten einer vorgegebenen Menge an Flüssigkeit geeignet ist; wobei die Kapsel (1) einen Kragen umfasst, der durch das Ende der Seitenwand (4) gegenüber der Bodenwand (5) definiert ist; wobei die Herstellungsmaschine (10) umfasst:
- eine Gießstation (S1) für die becherförmigen Körper (2);
- eine erste Kontrollstation (S4), die stromabwärts der Gießstation (S1) angeordnet ist, um die Konformität einer ersten Wand (5) des becherförmigen Körpers (2) zu prüfen; und
- eine erste Übergabestation (S5), die stromabwärts der ersten Kontrollstation (S4) angeordnet ist und die becherförmigen Körper (2) in Ablagen (35) übergibt, die auf einem Förderer zugeführt werden;
wobei die Maschine **dadurch gekennzeichnet ist, dass** sie ein Trägerelement (21) für mehrere becherförmige Körper (2) umfasst, das mindestens drei Kapselträgertische (29) aufweist, die ausgelegt sind, in jeweiligen ersten Aufnahmen (30) eine gegebene Anzahl becherförmiger Körper (2) aufzunehmen; wobei zwei periphere Kapselträgertische (29A, 29C) zwischen einer ersten Position, in der sie mit einem Abstand (D) ungleich null von einem mittigen Kapselträgertisch (29B) angeordnet sind, und einer zweiten Position, in der sie nahe an dem mittigen Kapselträgertisch (29B) angeordnet sind, und umgekehrt bewegbar sind; wobei die zwei peripheren Kapselträgertische (29A, 29C) bei der Übergabe von der ersten Kontrollstation (S4) zur ersten Übergabestation (S5) von der ersten Position in die zweite Position bewegt werden.

2. Maschine nach Anspruch 1, wobei der Abstand zwischen zwei benachbarten, becherförmigen Körpern (2) in den Ablagen (35) sowohl in einer ersten Richtung (W) als auch in einer zweiten Richtung (V) in Bezug auf den Abstand zwischen zwei becherförmigen Körpern (2), die sich im Trägerelement (21) nebeneinander befinden, halbiert ist.

3. Maschine nach einem der vorhergehenden Ansprüche, wobei jede Ablage (35) eine Anzahl zweiter Aufnahmen (36) aufweist, die gleich einem Vielfachen (k), das vorzugsweise gleich 4 ist, der Anzahl der ersten Aufnahmen (30) des Trägerelements (21) ist.

4. Maschine nach einem der vorhergehenden Ansprüche, wobei die Kapselträgertische (29) mit einstellbaren Endanschlagelementen versehen sind, derart, dass sie in der zweiten Position mit einem gegebenen Abstand voneinander angeordnet sind.

5. Maschine nach einem der vorhergehenden Ansprüche, wobei die erste Übergabestation (S5) einen Arm umfasst, der die Ausrichtung der einzelnen becherförmigen Körper (2) ändert, indem sie um 90° gedreht werden, und sie anschließend in Ablagen (35) übergibt, die auf dem Förderer zugeführt werden.

6. Maschine nach einem der vorhergehenden Ansprüche, wobei die becherförmigen Körper (2) in dem Trägerelement (21) in mehreren Reihen (R'₁-R'₈) angeordnet sind und die erste Kontrollstation (S4) eine optische Kontrollvorrichtung (33) umfasst, die mit einer Anzahl optischer Vorrichtungen (34) versehen ist, die derart ausgerichtet sind, dass sie die Kontrolle aller becherförmigen Körper (2) derselben Reihe (R'₁-R'₈) gleichzeitig ausführen.

7. Maschine nach Anspruch 6, wobei die Anzahl der optischen Vorrichtungen (34) die Hälfte der Anzahl der becherförmigen Körper (2) ist, die jede Reihe (R'₁-R'₈) bilden; und wobei jede optische Vorrichtung (34) dem Trägerelement (21) direkt zugewandt ist, zwischen zwei aufeinanderfolgend angeordneten, becherförmigen Körpern (2) eingefügt ist und mit zwei reflektierenden Elementen, insbesondere zwei Spiegeln, zusammenwirkt, derart, um die Kontrolle der beiden aufeinanderfolgend angeordneten, becherförmigen Körper (2) gleichzeitig auszuführen.

8. Maschine nach einem der vorhergehenden Ansprüche, wobei die becherförmigen Körper (2) in der ersten Position in mehreren Reihen (R'₁-R'₈) angeordnet sind, wobei jede Reihe (R'₁-R'₈) in eine Anzahl Gruppen (G'₁-G'₃) aufgeteilt ist, die mit einem Abstand (D) ungleich null voneinander angeordnet sind; und die becherförmigen Körper (2) in der zweiten Position in mehreren Reihen (R'₁-R'₈) angeordnet sind und zueinander gleich beabstandet sind.

9. Maschine nach einem der vorhergehenden Ansprüche, wobei das Trägerelement (21) für mehrere becherförmige Körper (2) sechs Kapselträgertische (29) aufweist, die in zwei Reihen mit jeweils drei Kapselträgertischen (29) angeordnet sind; wobei die peripheren Kapselträgertische (29A, 29C) mit zwei entsprechenden Platten (21, 32) verbunden sind, die von der ersten in die zweite Position und umgekehrt beweglich sind.

10. Verfahren zur Verwendung der Herstellungsmaschine (10) gemäß einem der Ansprüche von 1 bis 9 für die Produktion von Kapseln (1) für Raucherzeugnisse, insbesondere für Filter, die ausgelegt sind, eine Flüssigkeit zu enthalten, die beim Kühlen des Rauchs verwendet werden soll; wobei jede Kapsel (1) einen becherförmigen Körper (2) umfasst, der durch eine Seitenwand (4) und an einem Ende durch eine Bodenwand (5) definiert ist; wobei die Seitenwand (4) eine Längsachse (3) aufweist und mit der Bodenwand (5) ein Fach (6) begrenzt, das zum Enthalten einer vorgegebenen Menge an Flüssigkeit geeignet ist; wobei die Kapsel (1) einen Kragen umfasst, der durch das Ende der Seitenwand (4) gegenüber der Bodenwand (5) definiert ist; wobei das Verfahren der Reihe nach vorsieht:
- einen Gießformschritt, um die becherförmigen Körper (2) zu formen, wobei die becherförmigen Körper (2) in mehreren Reihen (R'₁-R'₈) angeordnet sind, die jeweils in eine Anzahl Gruppen (G'₁-G'₃) aufgeteilt sind, die mit einem Abstand (D) ungleich null voneinander angeordnet sind;
- einen ersten Kontrollschritt, um die Konformität einer ersten Wand (5) des becherförmigen Körpers (2) zu prüfen; und
- einen Übergabeschritt, um die becherförmigen Körper (2) in Ablagen (35) zu übergeben, die auf einem Förderer zugeführt werden, wobei die becherförmigen Körper (2) während des Übergabeschritts näher zueinander bewegt werden, derart, dass sie zueinander gleich beabstandet in mehreren Reihen (R'₁-R'₈) angeordnet sind.

11. Verfahren nach Anspruch 10, und den weiteren Schritt des Halbierens des Abstands zwischen zwei benachbarten, becherförmigen Körpern (2) in den Ablagen (35) sowohl in einer ersten Richtung (W) als auch in einer zweiten Richtung (V) umfasst.

12. Verfahren nach Anspruch 10 oder 11, und anschließend an den Kontrollschritt den weiteren Schritt des Übergebens der becherförmigen Körper (2), indem sie um 90° gedreht werden, umfasst.

13. Verfahren nach einem der Ansprüche 10 bis 12, und den weiteren Schritt des Wiederholens des Übergabeschritts, um die becherförmigen Körper (2) zu übergeben, aufeinanderfolgend für eine gegebene Anzahl, die vorzugsweise gleich vier ist, um die Ablage (35) zu befüllen, umfasst.

14. Verfahren nach Anspruch 13, und aufeinanderfolgend die folgenden weiteren Schritte umfasst:
- Befüllen erster Aufnahmen (36A) der Ablage (35);
- Befüllen zweiter Aufnahmen (36B) der Ablage (35), wobei die zweiten Aufnahmen (36B) entlang einer ersten Richtung (W, V) zwischen entsprechenden ersten Aufnahmen (36A) eingefügt sind;
- Befüllen dritter Aufnahmen (36C) der Ablage (35), wobei die dritten Aufnahmen (36C) entlang einer zweiten Richtung (V, W) zwischen entsprechenden ersten Aufnahmen (36A) eingefügt sind; und
- Befüllen vierter Aufnahmen (36D) der Ablage (35), wobei die vierten Aufnahmen (36D) entlang der ersten Richtung (W, V) zwischen entsprechenden dritten Aufnahmen (36C) eingefügt sind.

## Revendications

1. Machine de fabrication (10) pour la production de capsules (1) pour des articles à fumer, en particulier pour des filtres, conçues pour contenir un liquide à utiliser pour le refroidissement de la fumée ; où chaque capsule (1) comprend un corps en forme de coupelle (2), défini par une paroi latérale (4) et, à une extrémité, par une paroi inférieure (5) ; la paroi latérale (4) a un axe longitudinal (3) et délimite, avec la paroi inférieure (5), un compartiment (6), qui est approprié pour contenir une quantité prédéterminée de liquide ; la capsule (1) comprenant une collerette définie par l'extrémité de la paroi latérale (4) opposée à la paroi inférieure (5) ; la machine de fabrication (10) comprend :
- un poste de moulage (S1) pour les corps en forme de coupelle (2) ;
- un premier poste de contrôle (S4) agencé en aval du poste de moulage (S1) pour vérifier la conformité d'une première paroi (5) du corps en forme de coupelle (2) ; et
- un premier poste de transfert (S5) agencé en aval du premier poste de contrôle (S4) et qui transfère les corps en forme de coupelle (2) dans des plateaux (35) avancés sur un transporteur ;
la machine est **caractérisée en ce qu'**elle comprend un élément de support (21) pour une pluralité de corps en forme de coupelle (2) comportant au moins trois tables porte-capsules (29), qui sont conçues pour loger un nombre donné de corps en forme de coupelle (2) dans des premiers sièges (30) respectifs ; où deux tables porte-capsules périphériques (29A, 29C) peuvent être déplacées entre une première position, à laquelle elles sont agencées à une distance (D), autre que zéro, d'une table porte-capsules centrale (29B), et une deuxième position à laquelle elles sont agencées à proximité de la table porte-capsules centrale (29B), et vice-versa ; où, au cours du transfert du premier poste de contrôle (S4) au premier poste de transfert (S5), les deux tables porte-capsules périphériques (29A, 29C) sont déplacées de la première position à la deuxième position.

2. Machine selon la revendication 1, dans laquelle la distance entre deux corps en forme de coupelle (2) adjacents dans les plateaux (35) est divisée en deux à la fois dans une première direction (W) et dans une deuxième direction (V) par rapport à la distance entre deux corps en forme de coupelle (2) à côté l'un de l'autre dans l'élément de support (21).

3. Machine selon l'une des revendications précédentes, dans laquelle chaque plateau (35) comporte un nombre de deuxièmes sièges (36) qui est égal à un multiple (k), de préférence égal à quatre, du nombre de premiers sièges (30) de l'élément de support (21).

4. Machine selon l'une des revendications précédentes, dans laquelle les tables porte-capsules (29) sont pourvues d'éléments de butée de fin de course ajustables, de manière à être agencées, à la deuxième position, à une distance donnée les unes des autres.

5. Machine selon l'une des revendications précédentes, dans laquelle le premier poste de transfert (S5) comprend un bras, qui change l'orientation des corps en forme de coupelle (2) individuels en les tournant de 90° et qui les transfère par la suite dans des plateaux (35) avancés sur le transporteur.

6. Machine selon l'une des revendications précédentes, dans laquelle les corps en forme de coupelle (2) sont agencés dans l'élément de support (21) en plusieurs rangées (R'₁ à R'₈) et le premier poste de contrôle (S4) comprend un dispositif de contrôle optique (33) pourvu d'un certain nombre de dispositifs optiques (34), qui sont alignés de manière à effectuer simultanément le contrôle de tous les corps en forme de coupelle (2) de la même rangée (R'₁ à R'₈).

7. Machine selon la revendication 6, dans laquelle le nombre de dispositifs optiques (34) est égal à la moitié du nombre des corps en forme de coupelle (2) qui constituent chaque rangée (R'₁ à R'₈) ; et où chaque dispositif optique (34) fait directement face à l'élément de support (21), est interposé entre deux corps en forme de coupelle (2) agencés successivement et coopère avec deux éléments réfléchissants, en particulier deux miroirs, de manière à effectuer simultanément le contrôle desdits deux corps en forme de coupelle (2) agencés successivement.

8. Machine selon l'une des revendications précédentes, dans laquelle, à la première position, les corps en forme de coupelle (2) sont agencés en plusieurs rangées (R'₁ à R'₈), où chaque rangée (R'₁ à R'₈) est divisée en un nombre de groupes (G'₁ à G'₃) agencés à une distance (D), autre que zéro, les uns des autres ; et, à la deuxième position, les corps en forme de coupelle (2) sont agencés en plusieurs rangées (R'₁ à R'₈) et sont équidistants les uns des autres.

9. Machine selon l'une des revendications précédentes, dans laquelle l'élément de support (21) pour une pluralité de corps en forme de coupelle (2) comporte six tables porte-capsules (29) agencées en deux rangées avec trois tables porte-capsules (29) chacune ; où les tables porte-capsules périphériques (29A, 29C) sont reliées à deux plaques (21, 32) respectives, qui peuvent être déplacées de la première à la deuxième position, et vice-versa.

10. Procédé d'utilisation de la machine de fabrication (10) selon l'une des revendications 1 à 9 pour la production de capsules (1) pour des articles à fumer, en particulier pour des filtres, conçues pour contenir un liquide à utiliser pour le refroidissement de la fumée ; où chaque capsule (1) comprend un corps en forme de coupelle (2), qui est défini par une paroi latérale (4) et, à une extrémité, par une paroi inférieure (5) ; la paroi latérale (4) a un axe longitudinal (3) et délimite, avec la paroi inférieure (5), un compartiment (6), qui est approprié pour contenir une quantité prédéterminée de liquide ; la capsule (1) comprenant une collerette définie par l'extrémité de la paroi latérale (4) opposée à la paroi inférieure (5) ; le procédé réalisant dans l'ordre :
- une étape de moulage pour mouler les corps en forme de coupelle (2), où les corps en forme de coupelle (2) sont agencés en plusieurs rangées (R'₁ à R'₈), chacune d'elles étant divisée en un nombre de groupes (G'₁ à G'₃) agencés à une distance (D), autre que zéro, les uns des autres ;
- une première étape de contrôle pour vérifier la conformité d'une première paroi (5) du corps en forme de coupelle (2) ; et
- une étape de transfert pour transférer les corps en forme de coupelle (2) dans des plateaux (35) avancés sur un transporteur, pendant ladite étape de transfert, les corps en forme de coupelle (2) sont rapprochés les uns des autres, de manière à être agencés de manière équidistante les uns des autres en plusieurs rangées (R'₁ à R'₈).

11. Procédé selon la revendication 10 et comprenant l'étape supplémentaire de division en deux de la distance entre deux corps en forme de coupelle (2) adjacents dans les plateaux (35) à la fois dans une première direction (W) et dans une deuxième direction (V).

12. Procédé selon la revendication 10 ou 11 et comprenant l'étape supplémentaire, à la suite de l'étape de contrôle, de transfert des corps en forme de coupelle (2) en les tournant de 90°.

13. Procédé selon l'une des revendications 10 à 12 et comprenant l'étape supplémentaire de répétition successivement de l'étape de transfert pour transférer les corps en forme de coupelle (2) un nombre de fois donné, de préférence égal à quatre, afin de remplir le plateau (35).

14. Procédé selon la revendication 13 et comprenant successivement les étapes supplémentaires :
- de remplissage de premiers sièges (36A) du plateau (35) ;
- de remplissage de deuxièmes sièges (36B) du plateau (35), où les deuxièmes sièges (36B) sont interposés entre des premiers sièges (36A) respectifs le long d'une première direction (W, V) ;
- de remplissage de troisièmes sièges (36C) du plateau (35), où les troisièmes sièges (36C) sont interposés entre des premiers sièges (36A) respectifs le long d'une deuxième direction (V, W) ; et
- de remplissage de quatrièmes sièges (36D) du plateau (35), où les quatrièmes sièges (36D) sont interposés entre des troisièmes sièges (36C) respectifs le long de la première direction (W, V).
